# EUROPÄISCHE PATENTSCHRIFT

(11) **EP 3 756 000 B1**
(45) Veröffentlichungstag und Bekanntmachung des Hinweises auf die Patenterteilung: **03.06.2026**
(21) Anmeldenummer: 19701618.1
(22) Anmeldetag: 23.01.2019
(51) Int. Cl.: G01N 29/024

(54) **VORRICHTUNG ZUR QUALITÄTSBESTIMMUNG, TANKVORRICHTUNG**
APPARATUS FOR QUALITY DETERMINATION, TANK APPARATUS
DISPOSITIF DE DÉTERMINATION DE QUALITÉ, ENSEMBLE RÉSERVOIR

(30) Priorität: 21.02.2018 DE 102018202587
(43) Veröffentlichungstag der Anmeldung: 30.12.2020
(73) Patentinhaber: Robert Bosch GmbH, 70442 Stuttgart (DE)
(72) Erfinder: LIEBLER, Marko, 75015 Bretten (DE); SCHEUFELE, Bernd, 73257 Koengen (DE); KLENGE, Stefan, 70839 Gerlingen (DE); BACHHUBER, Frank, 70199 Stuttgart (DE); GERLACH, Andre, 71229 Leonberg-Hoefingen (DE); WEINMANN, Reinold, 73733 Esslingen Am Neckar (DE)
(86) Internationale Anmeldenummer: PCT/EP2019/051545
(87) Internationale Veröffentlichungsnummer: WO 2019/162021

(56) Entgegenhaltungen:
- DE-A1- 102014 210 080
- DE-U1- 202017 104 156
- JP-A- H07 311 184
- US-A1- 2014 060 177

## Beschreibung

Die Erfindung betrifft eine Vorrichtung zur Qualitätsbestimmung einer Flüssigkeit, insbesondere eines Abgasnachbehandlungsmittels, mit zumindest einer in einem die Flüssigkeit aufbewahrenden Tank anordenbaren Prüfeinheit, die zumindest einen Ultraschallwandler zum Aussenden und Empfangen eines Ultraschallsignals und zumindest zwei Ultraschallreflektorflächen zum Reflektieren des ausgesandten Ultraschallsignals zu dem zumindest einen Ultraschallwandler aufweist.

Weiterhin betrifft die Erfindung eine Tankvorrichtung, insbesondere Reduktionsmitteltankvorrichtung für ein Abgasnachbehandlungssystem eines Kraftfahrzeugs, mit einem Tank zur Aufbewahrung und Bereitstellung einer Flüssigkeit, insbesondere eines Abgasnachbehandlungsmittels, und mit einer Vorrichtung zur Qualitätsbestimmung der Flüssigkeit, wobei die Vorrichtung zumindest eine in dem Tank angeordnete Prüfeinheit aufweist.

### Stand der Technik

Vorrichtungen und Tankvorrichtungen der eingangs genannten Art sind aus dem Stand der Technik bekannt. Um die immer strenger werdenden gesetzlichen Vorgaben für Abgasemissionen von Kraftfahrzeugen mit Verbrennungsmotoren zu erfüllen, ist es erforderlich, insbesondere bei Dieselmotoren, die Stickoxide (NOx) im Abgas zu reduzieren. Hierfür sind Abgasnachbehandlungssysteme im Einsatz, die Stickoxide selektiv mithilfe von Ammoniak zu Stickstoff reduzieren. Insbesondere die sogenannte selektive katalytische Reduktion (SCR = Selective Catalytic Reduction) hat sich dabei als besonders effizient herausgestellt. Als Reduktionsmittel wird dabei eine wässrige Harnstofflösung eingesetzt, die in einen Abgasstrang stromaufwärts eines SCR-Katalysators eingebracht wird. Die Harnstofflösung bildet vor und/oder in dem Katalysator Ammoniak, der letztendlich zur gewünschten Verringerung der Stickoxide im Abgas mithilfe des SCR-Katalysators führt.

Um einen sicheren Betrieb der Abgasnachbehandlungseinrichtung zu gewährleisten, ist das Reduktionsmittel in ausreichender Menge und Qualität in dem Tank bereitzustellen. Bei einer zu geringen Qualität, die sich insbesondere durch eine zu geringe Konzentration des Reduktionsmittels in der Flüssigkeit darstellt, nimmt der Wirkungsgrad des Abgasnachbehandlungssystems deutlich ab. Bei einem zu hohen Harnstoffanteil beziehungsweise bei einer zu hohen Harnstoffkonzentration reagiert das zu viel gebildete Ammoniak nicht mit den Stickoxiden im Abgas und es wird Ammoniak emittiert. Es ist daher von hoher Bedeutung, die Qualität beziehungsweise Konzentration des Reduktionsmittels, insbesondere des Harnstoffanteils in dem Reduktionsmittel, überwachen zu können, auch um ein unzulässiges Nachbetanken des Tanks mit Wasser anstelle von Reduktionsmitteln zu erfassen.

Aus dem Stand der Technik sind bereits unterschiedliche Vorrichtungen bekannt, die berührungsfrei mithilfe von Ultraschallsignalen die Qualität beziehungsweise Konzentration eines Reduktionsmittels überwachen. So offenbart beispielsweise die Offenlegungsschrift US 2016/041024 A eine Vorrichtung der eingangs genannten Art. Diese weist einen piezo-elektrischen Schallwandler als Ultraschallwandler auf, der zugleich Sender und Empfänger ist. Der Ultraschallwandler sendet zunächst ein Ultraschallsignal in die in dem Tank befindliche Flüssigkeit aus, wobei das Ultraschallsignal durch einen Ultraschallreflektor zu dem Ultraschallwandler zurück reflektiert wird und die Flüssigkeit erneut durchläuft. Aus der dabei gemessenen Laufzeit des Ultraschallsignals zwischen Aussenden und Empfangen und der als bekannt angenommenen Länge des Laufwegs wird die Schallgeschwindigkeit der Flüssigkeit und damit die Konzentration des Reduktionsmittels in der Flüssigkeit erkannt. Aufgrund temperaturbedingter, mechanisch bedingter und alterungsbedingter Änderungen der im System verwendeten Materialien kann es jedoch zu Veränderungen der tatsächlichen Messstrecke kommen, wodurch sich das Messergebnis verändern kann. Um eine derartige Veränderung zu berücksichtigen, wird in der Offenlegungsschrift DE 10 2015 212 622 A1 vorgeschlagen, thermische Verformungen des Reflektors physikalisch zu modellieren und bei der Auswertung der gemessenen Laufzeit mittels eines temperaturabhängigen Korrekturfaktors zu berücksichtigen.

Aus der Offenlegungsschrift DE 10 2013 219 643 A1 ist es außerdem bekannt, zwei Reflektoren vorzusehen, um thermisch und alterungsbedingte Änderungen der Messstrecke, die sich negativ auf die Genauigkeit der Prüfeinheit auswirken, zu reduzieren. Dabei sind die Reflektoren jeweils als Reflektorzylinder ausgebildet, dessen Mantelfläche eine Reflektorfläche bildet, sodass die jeweilige Reflektorfläche an einem separaten Trägerelement angeordnet ist, wobei die Reflektorzylinder auf einer separaten Grundplatte befestigt beziehungsweise gehalten sind. Die Konzentrationsbestimmung basiert dabei außerdem nicht auf einer Laufzeitmessung eines Ultraschallsignals, sondern auf der Auswertung des gemessenen Laufunterschieds zwischen den zwei verschieden weit von dem Schallwandler entfernt angeordneten Reflektorzylinder. Eine weitere Vorrichtung zur Qualitätsbestimmung ist auch aus der Offenlegungsschrift DE 10 2011 086 774 A1 bekannt, wobei hier ein Reflektor in einem Winkel zum Schallwandler angeordnet ist.

Weiterhin offenbart die Gebrauchsmusterschrift DE 20 2017 104 156 U1 eine Vorrichtung zum Messen einer Konzentration eines Reduktionsmittels mit einem Tank, wobei innerhalb des Tanks in der Flüssigkeit ein Reflektorbauteil und außerhalb des Tanks eine mit dem Reflektorbauteil in Wirkverbindung stehende Sensorvorrichtung angeordnet ist.

### Offenbarung der Erfindung

Die erfindungsgemäße Vorrichtung mit den Merkmalen des Anspruchs 1 hat den Vorteil, dass sie kostengünstig herstellbar ist und die Messgenauigkeit der Prüfeinheit deutlich verbessert. Durch eine vorteilhafte Anordnung und Gestaltung von zumindest zwei Reflektorflächen wird die Messgenauigkeit optimiert und bietet präzise Messergebnisse insbesondere auch dann, wenn sich die Temperatur im Messmedium und/oder der Umgebung verändert. Auch mechanische Spannungen, die durch Fertigungs- und/oder Montagetoleranzen entstehen können, sowie durch materialbedingte Alterungseffekte, werden dabei durch die vorteilhafte Vorrichtung berücksichtigt. Die Erfindung beruht dabei auf der Idee, zwei Schallausbreitungspfade mit einem durch die Reflektorgeometrie bekannten Laufwegunterschied zwischen diesen beiden Pfaden zu nutzen. Erfindungsgemäß weist hierzu die Prüfeinheit zumindest zwei Ultraschallreflektorflächen auf, die direkt an einem gemeinsamen und einstückig ausgebildeten Trägerelement in unterschiedlichen Entfernungen zu dem Ultraschallwandler ausgebildet oder angeordnet sind. Die Reflektoreinheit beziehungsweise das Reflektorbauteil, bestehend aus dem Trägerelement und den zumindest zwei Ultraschallreflektorflächen, stellt somit eine Baueinheit dar, bei welcher die Anordnung der Reflektorflächen zueinander bereits bei der Herstellung beziehungsweise Vormontage außerhalb des Tanks vorgegeben ist. Unterschiedliche Wärmeausdehnungskoeffizienten spielen aufgrund des einstückig ausgebildeten Trägerelements keine oder nur noch eine untergeordnete Rolle bei der Messung von Laufzeitunterschieden der Ultraschallsignale. Das Material des Trägerelements ist bevorzugt derart gewählt, dass es über den vorgesehenen Einsatztemperaturbereich eine möglichst geringe Wärmedehnung aufweist. Der verbleibende Einfluss der Wärmedehnung kann durch die vorteilhafte Ausbildung systematisch korrigiert werden. Durch die bevorzugte Verwendung eines Differenzmessprinzips wird der Einfluss von Positions- oder Ausrichtungstoleranzen bei der Montage weiterhin minimiert. Der absolute Abstand zwischen Ultraschallwandler und der jeweiligen Ultraschallreflektorfläche geht nicht in die Berechnung der Ausbreitungsgeschwindigkeit ein und muss damit nicht bekannt und im Einsatzbereich nicht konstant gleich sein. Die eigentliche Messstrecke ist allein durch das Reflektorbauteil mit dem einstückig ausgebildeten Trägerelement festgelegt. Das Trägerelement ist beispielsweise durch ein kostengünstiges Fertigungsverfahren, wie etwa ein Stanz- oder Umformverfahren oder auch ein Fließpressverfahren hergestellt. Dadurch ist eine kostengünstige Herstellung auch in der Massenfertigung möglich. Dabei ist die Ausbildung des Reflektorbauteils nicht auf das Vorhandensein von zwei Ultraschallreflektorflächen beschränkt, vielmehr können auch mehr als zwei Ultraschallreflektorflächen an dem Trägerelement ausgebildet oder angeordnet sein.

Gemäß einer nicht erfindungsgemäßen Ausführungsform sind die Ultraschallreflektorflächen dazu ausgebildet, das Ultraschallsignal direkt zu dem Ultraschallwandler zurück zu reflektieren. Das bedeutet, dass die Ultraschallreflektorflächen dem Ultraschallwandler gegenüberliegend angeordnet sind, um eine direkte Rückreflexion zu gewährleisten. Hierdurch ergibt sich eine besonders einfache Konstruktion der Prüfeinheit, bei welcher der zu erfassende Laufzeitunterschied sich direkt aus der Entfernung der Ultraschallreflektorflächen zueinander in Richtung zu dem Ultraschallwandler ergibt.

Gemäß der Erfindung ist vorgesehen, dass zumindest eine der Ultraschallreflektorflächen schräg zu dem Ultraschallwandler und zu der anderen Ultraschallreflektorfläche ausgerichtet und dazu ausgebildet ist, das Ultraschallsignal zumindest einmal umzulenken, bevor es zu dem Ultraschallwandler zurückreflektiert wird. In diesem Fall wird das Ultraschallsignal von zumindest einer der Ultraschallreflektorflächen somit nicht direkt zu dem Ultraschallwandler zurückreflektiert, sondern zunächst zu zumindest einer weiteren Reflexionsfläche, erfindungsgemäß zu zumindest einem weiteren Ultraschallreflektor gelenkt beziehungsweise reflektiert, von welchem aus das Ultraschallsignal zu dem Ultraschallwandler zurückgelenkt/-reflektiert wird. Durch das mehrfache Umlenken wird die Laufzeitdifferenz der zurückreflektierten Ultraschallsignale erhöht. Die Laufzeitdifferenz der beiden zurückreflektierten Ultraschallsignale muss mindestens so groß sein, dass beide Ultraschallsignale eindeutig zeitlich voneinander getrennt werden können. Längere Laufzeitdifferenzen erhöhen aufgrund der längeren Laufwegunterschiede außerdem die Genauigkeit der Mediencharakterisierung. Durch die vorstehend beschriebene vorteilhafte Ausbildung wird eine Erhöhung der Laufwegunterschiede in einfacher Art und Weise realisiert. Während vorliegend davon ausgegangen wird, dass zwei Ultraschallsignale zu dem Ultraschallwandler zurückreflektiert werden, ist es auch möglich, mehr als zwei Ultraschallsignale zurück zu reflektieren, beispielsweise indem zumindest drei oder mehr Ultraschallreflektoren dem Ultraschallwandler gegenüberliegen und das ausgesendete Ultraschallsignal in unterschiedlicher Art und Weise direkt oder indirekt, zu dem Ultraschallwandler zurückreflektieren.

Gemäß einer bevorzugten Ausbildung der Erfindung weist zumindest eine der Reflektorflächen eine Krümmung auf oder ist gekrümmt, insbesondere konkav oder konvex, ausgebildet. Hierdurch wird das Signal-Rauschverhältnis des Ultraschallsignales verbessert. In Abhängigkeit von der Krümmung der Ultraschallreflektor-Oberfläche ist auch eine Schallfeldfokussierung möglich. Dazu ist die betroffene Ultraschallreflektorfläche beispielsweise in der Form eines Paraboloids, Kugelschalenabschnitts oder Zylinderschalenabschnitts geformt.

Weiterhin ist zumindest eine der Reflektorenflächen erfindungsgemäß neben und insbesondere in Laufrichtung des Ultraschallsignals versetzt zu dem Ultraschallwandler und gegenüber einer anderen der Ultraschallreflektorflächen angeordnet. Damit liegt die eine Ultraschallreflektorfläche neben dem Ultraschallwandler, jedoch insbesondere in Laufrichtung versetzt zu diesem, sodass die Signale nicht die gleiche Laufzeit zwischen den beiden Ultraschallreflektorflächen einerseits und dem Ultraschallwandler und der anderen Ultraschallreflektorfläche andererseits aufweisen, sodass eine Auswertung der empfangenen Ultraschallsignale eindeutig möglich ist und insbesondere Mehrfachreflexionen gut voneinander trennbar sind. Der eine Ultraschallwandler reflektiert dann das erfasste Signal zurück zu dem anderen Ultraschallwandler, welcher das mehrfach reflektierte Ultraschallsignal anschließend zurück zu dem Ultraschallwandler reflektiert. Hierdurch ergibt sich ein besonders großer Laufzeitunterschied zwischen den beiden vom Ultraschallwandler erfassten Ultraschallsignalen.

Weiterhin weist bevorzugt die eine oder die andere Ultraschallreflektorfläche eine gekrümmte Reflexionsfläche auf, insbesondere während die andere oder eine Ultraschallreflektorfläche eine gerade beziehungsweise ebene Oberfläche aufweist. Dabei wird die Wahl der Krümmung insbesondere davon abhängig gemacht, ob der Ultraschallwandler eine divergierende Ultraschallwelle aussendet oder eine ebene Welle. Sendet der Ultraschallwandler als Ultraschallsignal eine divergierende Welle aus, so ist die gegenüberliegende Ultraschallreflektorfläche bevorzugt derart gekrümmt ausgebildet, dass die zurückreflektierte Ultraschallwelle eben ist. Dadurch wird erreicht, dass ein Teil des zurückreflektierten Ultraschallsignals auf den Ultraschallwandler trifft und ein anderer Teil auf den danebenliegenden Ultraschallreflektor. Der auf den Ultraschallwandler treffende Teil wird als erstes Echo detektiert. Der andere Teil wird zurück an der dem Ultraschallwandler gegenüberliegenden Ultraschallreflektorfläche reflektiert, trifft dort erneut auf die gekrümmte Reflektorfläche und wird unter erneuter Reflexion zurück auf den Ultraschallwandler gelenkt, wo er als zweites Echo empfangen wird. Sendet der Ultraschallwandler hingegen eine ebene Welle als Ultraschallsignal aus, so ist der dem Ultraschallwandler gegenüberliegende Ultraschallreflektor zweckmäßigerweise derart gekrümmt oder eben ausgebildet, dass das zurückreflektierte Ultraschallsignal beziehungsweise die zurückreflektierte Welle gekrümmt ist und dadurch sowohl den Ultraschallwandler als auch den danebenliegenden Ultraschallreflektor trifft.

Weiterhin ist bevorzugt vorgesehen, dass das Trägerelement zumindest eine Aussparung in einem reflektorfreien Bereich aufweist. Dadurch wird das Gewicht des Trägerelements reduziert und außerdem auch die Anzahl der Flächen, die das Ultraschallsignal reflektieren können, verringert. Dadurch werden Störsignale und ein Signalrauschen vorteilhaft reduziert.

Gemäß einer bevorzugten Weiterbildung der Erfindung ist zumindest einer der Ultraschallreflektorflächen als Beschichtung auf dem Trägerelement ausgebildet. Dadurch ist eine besonders einfache und genaue Positionierung der jeweiligen Ultraschallreflektorfläche auf dem Trägerelement gewährleistet. Als Materialien für den jeweiligen Ultraschallreflektor sind insbesondere Metalle, Keramiken oder sonstige Materialien mit hoher akustischer Impedanz bevorzugt. Bei Anwendungen mit aggressiven Medien/Fluiden, wird vorzugsweise Edelstahl oder ein anderes Metall, gegebenenfalls mit einer Oberflächenbeschichtung, verwendet. Auch sind gefüllte Kunststoffe bekannt, wobei als Kunststoff beispielsweise Duro- oder Thermoplaste vorgesehen sind. Insbesondere ist die jeweilige Ultraschallreflektorfläche durch ein additives Fertigungsverfahren hergestellt. Hierdurch ergibt sich eine hochpräzise Anordnung der jeweiligen Ultraschallreflektorfläche auf dem Trägerelement. Zusammen mit der einstückigen Ausbildung des Trägerelements ergibt sich hierdurch eine besonders hohe Präzision bei der Durchführung der Qualitätsbestimmung.

Vorzugsweise sind die Ultraschallreflektorflächen derart angeordnet, dass das Ultraschallsignal an zumindest einer der Ultraschallreflektorflächen mehrfach reflektiert wird. Durch die Mehrfachreflexion ist beispielsweise der Laufweg des Ultraschallsignals verlängerbar, um eine verbesserte Signalauswertung zu ermöglichen.

Weiterhin weist die Vorrichtung bevorzugt ein Steuergerät auf, das dazu ausgebildet ist, die Prüfeinheit, insbesondere den Ultraschallwandler, dazu anzusteuern, als Ultraschallsignale Burst-Signale zu erzeugen und zu empfangen, um in Abhängigkeit einer Laufzeitdifferenz der von den Ultraschallreflektorflächen zurückreflektierten Ultraschallsignale eine Massenkonzentration der Flüssigkeit zu bestimmen. Vorzugsweise liegt der Frequenzbereich der Burst-Signale zwischen 0,5 MHz und 10 MHz, bevorzugt bei 1 MHz bis 2 MHz. Höhere Frequenzen erlauben eine bessere räumliche Bündelung des Ultraschallfeldes sowie eine genauere Bestimmung der Laufzeit. Mit zunehmender Frequenz steigt jedoch auch die Absorption der Schallenergie im Ausbreitungsmedium. Das Steuergerät ist auch dazu ausgebildet, die von dem Ultraschallwandler empfangenen Ultraschallsignale beziehungsweise Echos auszuwerten, um die Qualitätsbestimmung durchzuführen. Insbesondere ist das Steuergerät dazu ausgebildet, die Bestimmung der Laufzeit zwischen der elektrischen Anregung des Ultraschallwandlers, insbesondere der Piezokeramik, und dem empfangenen Echo mittels einer einfachen Schwellwertbestimmung der Spannungsamplitude des Empfangssignals (Echos) oder über eine Nullpunktdetektion oder die Ermittlung des Eintreffens der Maximalamplitude nach einer Hüllkurvenbestimmung oder der Verwendung von Korrelationsverfahren oder anderen bekannten Methoden zur Laufzeitbestimmung aus Zeitsignalen durchzuführen.

Die erfindungsgemäße Tankvorrichtung mit den Merkmalen des Anspruchs 6 zeichnet sich durch die erfindungsgemäße Ausbildung der Vorrichtung aus. Es ergeben sich hierdurch die bereits genannten Vorteile.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnung näher erläutert werden. Dazu zeigen
- Figur 1: eine vorteilhafte Tankvorrichtung in einer vereinfachten Seitenansicht,
- Figur 2: ein erstes Ausführungsbeispiel einer vorteilhaften Prüfeinheit der Tankvorrichtung,
- Figur 3: ein zweites Ausführungsbeispiel der Prüfeinheit,
- Figur 4: ein drittes Ausführungsbeispiel der Prüfeinheit,
- Figur 5: ein viertes Ausführungsbeispiel der Prüfeinheit,
- Figur 6: ein fünftes Ausführungsbeispiel der Prüfeinheit,
- Figur 7: ein sechstes Ausführungsbeispiel der Prüfeinheit,
- Figur 8: ein siebtes Ausführungsbeispiel der Prüfeinheit und
- Figur 9: ein achtes Ausführungsbeispiel der Prüfeinheit, jeweils in einer vereinfachten Darstellung.

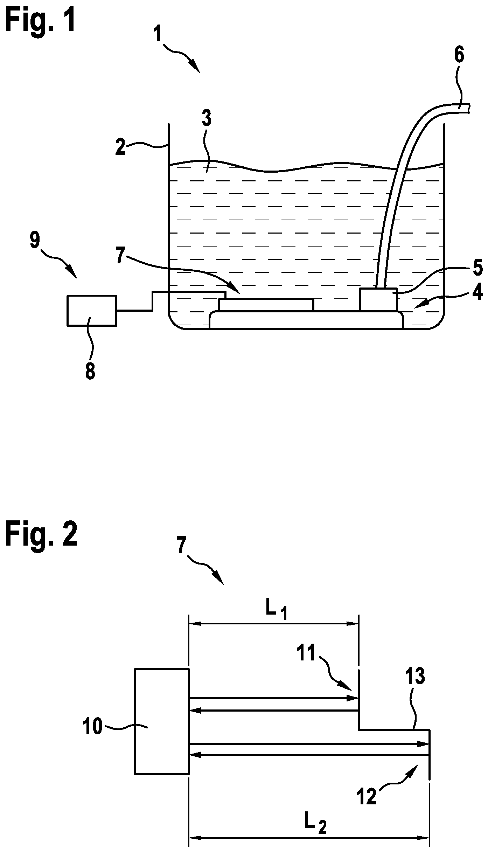

Figur 1 zeigt in einer vereinfachten Darstellung eine vorteilhafte Tankvorrichtung 1 für ein Abgasnachbehandlungssystem eines Kraftfahrzeugs. Die Tankvorrichtung 1 weist einen Tank 2 auf, in welchem ein flüssiges Abgasnachbehandlungsmittel, insbesondere Reduktionsmittel 3, gelagert ist. In dem Tank 2 ist ein Entnahmemodul 4 angeordnet, wobei das Entnahmemodul 4 insbesondere auf dem Boden des Tanks 2 liegt. Das Entnahmemodul trägt eine Fördereinrichtung 5, mittels welcher das Reduktionsmittel aus dem Tank 2 angesaugt und mittels einer Leitung 6 zu beispielsweise einem Dosierventil oder Einspritzventil gefördert werden kann. Das Entnahmemodul 4 weist weiterhin insbesondere einen Filter auf, der der Fördereinrichtung 5 vorgeschaltet ist, sowie optional eine Heizeinrichtung, um gegebenenfalls gefrorenes Abgasnachbehandlungsmittel aufzutauen. Bei dem Reduktionsmittel handelt es sich insbesondere um eine wässrige Harnstofflösung, die dazu verwendet wird, Ammoniak zu erzeugen, der mit dem Abgas einer Brennkraftmaschine des Kraftfahrzeugs Stickoxide reduzierend zusammenwirkt. Zum Bestimmen der Konzentration des Harnstoffs in der Flüssigkeit ist eine Prüfeinheit 7 vorhanden, die vorliegend ebenfalls dem Entnahmemodul 4 zugeordnet ist. Alternativ ist die Prüfeinheit 7 separat in dem Tank 2 vorhanden. Zusammen mit einem Steuergerät 8 bildet die Prüfeinheit 7 eine Vorrichtung 9 zum Bestimmen der Qualität der in dem Tank 2 befindlichen Flüssigkeit durch eine Konzentrationsbestimmung.

Anhand der Figuren 2 bis 9 sollen im Folgenden unterschiedliche Ausführungsbeispiele der Prüfeinheit 7 näher erläutert werden. Die Ausführungsbeispiele haben gemeinsam, dass die Prüfeinheit 7 jeweils einen Ultraschallwandler und zumindest zwei Ultraschallreflektorflächen aufweist, wobei die Ultraschallreflektorflächen an einem einstückig ausgebildeten Trägerelement angeordnet oder ausgebildet sind.

Figur 2 zeigt ein erstes Ausführungsbeispiel der Prüfeinheit 7 in einer vereinfachten Darstellung. Die Prüfeinheit 7 weist, wie zuvor bereits erwähnt, einen durch das Steuergerät 8 ansteuerbaren Ultraschallwandler 10 auf, der insbesondere als piezo-keramischer Ultraschallwandler ausgebildet ist. Dem Ultraschallwandler gegenüberliegend sind zwei Ultraschallreflektorflächen 11 und 12 angeordnet, die an einem gemeinsamen und einstückig ausgebildeten Trägerelement 13 angeordnet sind.

Grundsätzlich ist das Verwenden von Ultraschallwandlern zur Bestimmung von Fluideigenschaften aus dem Stand der Technik bekannt. Das Messprinzip basiert dabei auf einer Laufzeitmessung im flüssigen Medium bei einer bekannten Ausbreitungsstrecke zwischen Ultraschallwandler und Empfänger. Über die so ermittelte Ausbreitungsgeschwindigkeit des Schallsignals im Fluid und gegebenenfalls weiterer erfasster Messgrößen, wie beispielsweise der Fluidtemperatur, können unterschiedliche Medieneigenschaften ermittelt werden. Ein derartiger Ultraschallwandler wird beispielsweise zur Ermittlung und Überwachung der Massenkonzentration der in dem Tank befindlichen Harnstoff-Wasserlösung eingesetzt. Der Ultraschallwandler wandelt ein elektrisches Signal in eine Schallwelle und strahlt diese in das Fluid beziehungsweise in die in dem Tank 2 befindliche Flüssigkeit ab. Ein Empfänger wandelt das auf ihn treffende und von dem Ultraschallwandler ausgesendete Ultraschallsignal in ein elektrisches Signal um, das dann auswertbar ist. Bekannte Ultraschallwandler dienen sowohl als Sender als auch als Empfänger und nutzen den piezo-elektrischen Effekt, um zwischen Schall und elektrischen Signalen zu wandeln. In einem sogenannten Puls-Echo-Betrieb wird zumindest ein Reflektor benötigt, der die vom Ultraschallwandler 10 abgestrahlte Schallwelle über einen bekannten Ausbreitungsweg wieder auf diesen zurückreflektiert. Zu berücksichtigen ist hierbei das Ein- und Ausschwingverhalten des Ultraschallwandlers 10. Dies führt zu einer vorbestimmten Mindestlänge der Messstrecke, damit die beim Senden des Ultraschallsignals erzeugten mechanischen Schwingungen des Ultraschallwandlers 10 soweit abgeklungen sind, dass beim Empfangen des zurückgestreuten Echos (zurückreflektiertes Ultraschallsignal) eine eindeutige Trennung zwischen Sende- und Empfangssignal möglich ist.

Durch die in Figur 2 gezeigte vorteilhafte Ausbildung der Prüfeinheit 7 ergibt sich eine Messstrecke ΔL, die sich nicht aus dem Abstand der Reflektorflächen zu dem Ultraschallwandler 10, sondern aus dem Abstand der Reflektorflächen 11, 12 zueinander ergibt.

Beide Ultraschallreflektorflächen 11, 12 sind gegenüberliegend zu dem Ultraschallwandler 10 angeordnet. Das Trägerelement 13 ist dabei stufenförmig ausgebildet, wobei die Reflektorfläche 11 auf einer ersten Stufe und die Reflektorfläche 12 auf einer zweiten Stufe liegt. Die zweite Stufe ist dabei weiter beabstandet zu dem Ultraschallwandler 10 als die erste Stufe mit der Reflektorfläche 11. Zwischen der jeweiligen Ultraschallreflektorfläche 11, 12 und dem Ultraschallwandler 10 ergeben sich somit unterschiedliche Laufwege L₁ und L₂, aus deren Differenz sich die Messstrecke ΔL = L₂ - L₁ ergibt. Die Messstrecke wird somit durch das einteilige Trägerelement 13 bestimmt. Die Ausbreitungsgeschwindigkeit des Ultraschallsignals c_{F} berechnet sich nun aus der Laufzeitdifferenz Δt und dem Laufwegunterschied ΔL zu : c_{F} = ΔL / Δt.

Der absolute Abstand zwischen dem Ultraschallwandler 10 und den Ultraschallreflektorflächen 11, 12 geht somit nicht in die Berechnung ein und muss damit auch nicht bekannt oder konstant sein. Dadurch, dass das Trägerelement 13 einteilig ausgebildet ist, finden über den vorgesehenen Einsatztemperaturbereich kaum oder nur geringe Wärmedehnungen statt, die sich dann jedoch auf die beiden Ultraschallreflektorflächen 11, 12 gleichermaßen auswirken. Die Laufzeitdifferenz der beiden vom Ultraschallwandler 10 empfangenen Echos beziehungsweise zurückreflektierten Ultraschallsignale ist mindestens so groß, dass beide Ultraschallsignale eindeutig zeitlich voneinander getrennt werden. Längere Laufzeitdifferenzen aufgrund längerer Laufwegunterschiede erhöhen dabei die Genauigkeit der Mediencharakterisierung. Darüber hinaus können auch mehr als zwei Ausbreitungspfade realisiert und somit mehr als zwei Echos zur Auswertung herangezogen werden, wie weiter unten näher erörtert.

Gemäß dem vorliegenden Ausführungsbeispiel von Figur 2 sind die Reflektoren 11, 12 als plane Ultraschallreflektorflächen 11, 12 beziehungsweise als Ultraschallreflektorflächen 11, 12 mit planer/ebener Reflexionsfläche ausgebildet. Um eine möglichst hohe Signalamplitude insbesondere des zurückreflektierten Ultraschallsignals zu erreichen, werden geeignete Reflektormaterialien gewählt. Darüber hinaus kann durch eine gekrümmte Form der Reflektorgeometrie der jeweiligen Ultraschallreflektorfläche 11, 12 eine gebündelte Rückreflexion zum Ultraschallwandler 11 erfolgen.

Bei der Wahl der Reflektormaterialien ist die akustische Impedanz Z_{R} der jeweiligen Ultraschallreflektorfläche 11, 12 möglichst hoch gewählt. Die akustische Impedanz des Mediums ergibt sich aus dem Produkt der spezifischen Dichte des Mediums und der Schallausbreitungsgeschwindigkeit im Medium. Unter der Annahme des Einfalls einer ebenen Welle, aus der Flüssigkeit auf den jeweiligen Ultraschallreflektor 11, 12, ergibt sich der Amplitudenreflexionsfaktor R aus den akustischen Impedanzen Z_{F} der Flüssigkeit in dem Tank 2 und der jeweiligen Ultraschallreflektorfläche 11, 12 Z_{R}: R = (Z_{R} - Z_{F}) / (Z_{R} + Z_{F}).

Für eine gegebene akustische Impedanz Z_{F} des zu charakterisierenden Fluids ergibt sich eine hohe Rückstreuung, wenn die Impedanz des Reflektors Z_{R} deutlich größer ist als die des Fluids: Z_{R} >> Z_{F}. Als Reflektormaterialien kommen insbesondere Metalle, Keramiken oder sonstige Materialien mit hoher akustischer Impedanz in Frage. Bei Anwendungen in aggressiven Flüssigkeiten kommen insbesondere Edelstahl oder andere Metalle, gegebenenfalls mit einer Oberflächenbeschichtung zu deren Schutz, in Einsatz. Weitere Alternativen sind gefüllte Kunststoffe, wie beispielsweise Duro- oder Thermoplaste, die mit Metall oder Keramikpulver gefüllt sind. Der jeweilige Ultraschallreflektor 11, 12 ist bevorzugt durch additive Fertigungsverfahren direkt auf dem Trägerelement 13 hergestellt.

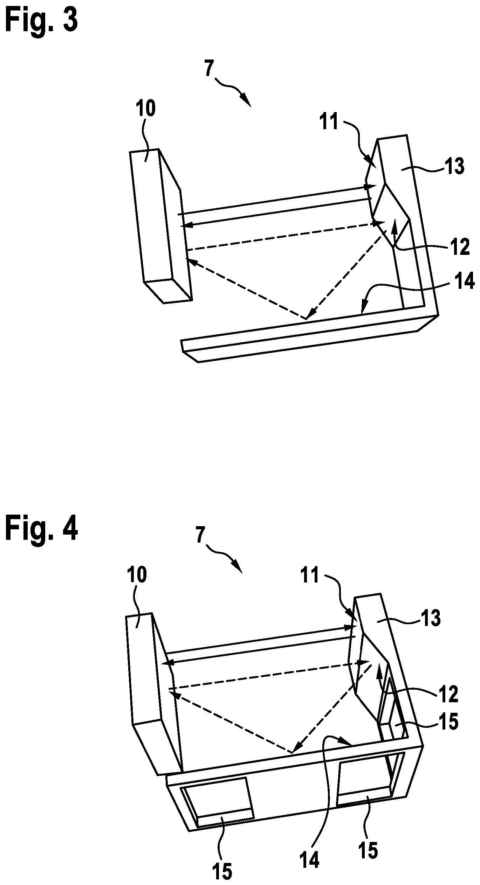

Figur 3 zeigt ein zweites Ausführungsbeispiel der Prüfeinheit 7, das sich von dem vorhergehenden Ausführungsbeispiel dadurch unterscheidet, dass die Laufzeitdifferenz durch eine Mehrfachreflexion vergrößert ist. Im Unterschied zu dem vorhergehenden Ausführungsbeispiel ist die zweite Reflektorfläche 12 nicht parallel, sondern schräg zu dem Ultraschallwandler 10 und damit auch zu der Ultraschallreflektorfläche 11 ausgerichtet, sodass das Ultraschallsignal von der Reflektorfläche 12 schräg zurückreflektiert wird. An dem Trägerelement 13 ist dabei eine dritte Reflektorfläche 14 angeordnet, auf welchen das Signal von der Reflektorfläche 12 reflektiert wird, wie durch gestrichelte Pfeile gezeigt. Die Ultraschallreflektorfläche 14 ist derart angeordnet, dass sie wiederum das reflektierte Ultraschallsignal zu dem Ultraschallwandler 10 zurückreflektiert. Dadurch wird die Laufzeit des Ultraschallsignals, das von der Ultraschallreflektorfläche 12 reflektiert wird, verlängert und die Messung optimiert. Vorliegend ist auch die dritte Ultraschallreflektorfläche 14 als ebene Reflektorfläche ausgebildet.

Figur 4 zeigt ein drittes Ausführungsbeispiel der Prüfeinheit 7, das sich von dem zweiten Ausführungsbeispiel dadurch unterscheidet, dass in dem Trägerelement 13 mehrere Aussparungen 15 ausgebildet sind. Die Aussparungen 15 sind jeweils in reflektorfreien Bereichen des Trägerelements 13 ausgebildet und dienen einerseits zur Gewichtsreduzierung und andererseits zur Minimierung von störenden Rückreflexionen an Flächen des Trägerelements, die nicht Teil der gewollten Ausbreitungspfade der Ultraschallsignale sind. Insbesondere sind nur die zur Reflexion und mechanischen Stabilität benötigten Flächen des Trägerelements aus einem Material mit hoher akustischer Impedanz hergestellt, während weitere Bereiche des Trägerelements aus einem Material mit niedrigerer akustischer Impedanz, beispielsweise aus Kunststoff, bestehen. Insbesondere bestehen das Trägerelement insgesamt aus Kunststoff, wie zuvor bereits erörtert, und die Reflektorflächen 11, 12 und 14 aus einem Material mit hoher Impedanz.

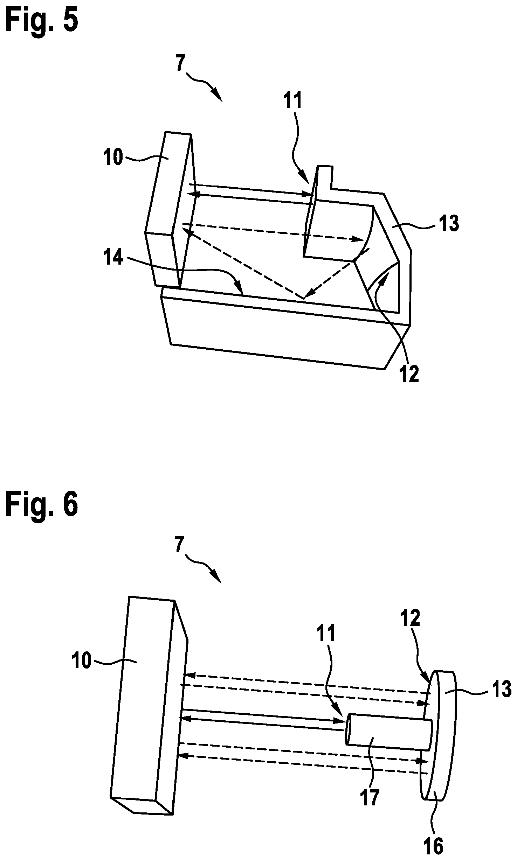

Figur 5 zeigt ein viertes Ausführungsbeispiel der Prüfeinheit 7, das sich von dem vorhergehenden Ausführungsbeispiel dadurch unterscheidet, dass der mehrfach umgelenkte Ausbreitungspfad eine noch längere Wegstrecke aufweist. Dazu ist gemäß dem Ausführungsbeispiel von Figur 5 der erste Reflektor 11 näher zu dem Ultraschallwandler 10 angeordnet. Dazu ist der Reflektor 11 an einer vorgesetzten Fläche des Trägerelements 13 angeordnet. Darüber hinaus ist der zweite Ultraschallreflektor 12 in diesem Ausführungsbeispiel nicht eben, sondern gekrümmt ausgebildet, um eine fokussierte Rückreflexion des Ultraschallsignals zu der dritten Ultraschallreflektorfläche 14 und dem Ultraschallwandler 10 zu erzielen. Dazu ist die Krümmung des Ultraschallreflektors 12 insbesondere paraboloid, kugelabschnittförmig oder zylinderabschnittförmig ausgebildet.

Figur 6 zeigt ein weiteres Ausführungsbeispiel der Prüfeinheit 7, das sich insbesondere von dem Ausführungsbeispiel von Figur 2 dadurch unterscheidet, dass das Trägerelement 13 insgesamt zylinderförmig ausgebildet ist, wobei es einen ersten Abschnitt 16 mit einem Durchmesser D1 und einem zweiten Abschnitt 17 mit einem Durchmesser D2 aufweist, wobei der Durchmesser D1 deutlich größer ist als der Durchmesser D2, sodass sich einerseits an dem Abschnitt 16 der Reflektor 12 als ringförmige Reflektorfläche ergibt, und der Reflektor 11 an der Stirnseite des Abschnitts 17. Hierdurch ergibt sich ein rotationssymmetrisches Reflektorbauteil, das kostengünstig und bauraumsparend realisiert ist.

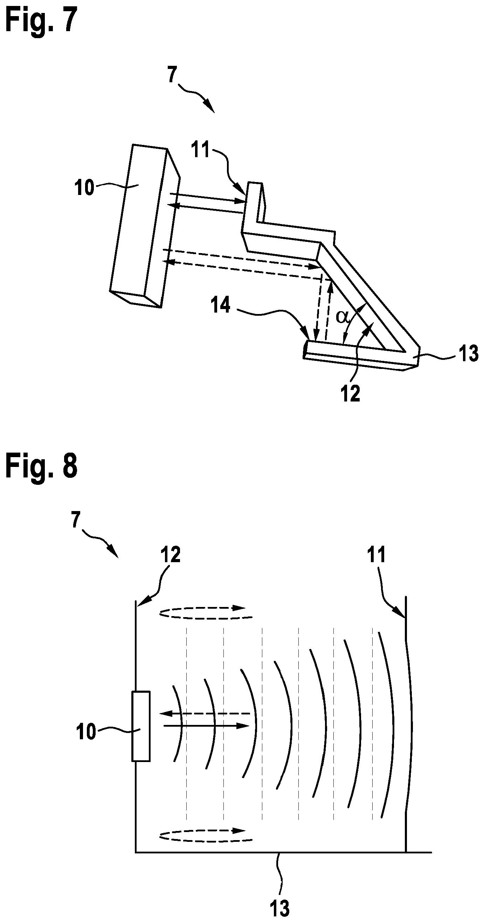

Figur 7 zeigt ein sechstes Ausführungsbeispiel der Prüfeinheit 7, das sich von dem Ausführungsbeispiel von Figur 5 dadurch unterscheidet, dass eine Mehrfachreflexion an der Reflektorfläche 12 stattfindet. Dazu sind die zweite Reflektorfläche 12 und die dritte Reflektorfläche 14 derart zueinander angeordnet, dass das von der Reflektorfläche 12 zu der Reflektorfläche 14 reflektierte beziehungsweise gelenkte Ultraschallsignal von der Reflektorfläche 14 zurück zu der Reflektorfläche 12 gelenkt und von da aus zu dem Ultraschallwandler 10 zurückreflektiert wird. Hierzu ist insbesondere ein Winkel von α = 45° durch die ebenen Reflektorflächen 12 und 14 vorgesehen.

Figur 8 zeigt ein siebtes Ausführungsbeispiel der Prüfeinheit 7, das sich von den vorhergehenden Ausführungsbeispielen dadurch unterscheidet, dass der zweite Reflektor 12 neben und in Laufrichtung des Ultraschallsignals versetzt zu dem Ultraschallwandler 10 angeordnet ist. Insbesondere liegt der Ultraschallwandler 10 innerhalb des Reflektors 12, der den Ultraschallwandler 10 somit an zumindest zwei Seiten einschließt. Die Reflektorfläche 11 liegt wie bisher dem Ultraschallwandler 10 gegenüber, weist jedoch eine Fläche auf, die im Wesentlichen der Fläche der Reflektorfläche 12 entspricht. Gemäß dem vorliegenden Ausführungsbeispiel ist der Ultraschallwandler 10 dazu ausgebildet, divergierende Ultraschallwellen auszusenden, wie durch durchgezogene Linien in Figur 8 gezeigt. Das gesendete Ultraschallsignal trifft auf die Ultraschallreflektorfläche 11, welcher wiederum selbst eine Krümmung aufweist, die derart gewählt ist, dass die von ihr reflektierten Ultraschallwellen als ebene Wellen zu dem Ultraschallwandler 10 und der Reflektorfläche 12 zurückreflektiert werden, wie durch gestrichelte Linien gezeigt. Diese Wellen werden von dem Ultraschallwandler 10 als erstes Echo erfasst. Da die Wellen außerdem die Ultraschallreflektorfläche 12 treffen, reflektieren sie an diesem zurück zu der Reflektorfläche 11, von wo aus sie zu dem Ultraschallwandler 10 als zweites Echo zurückreflektiert werden.

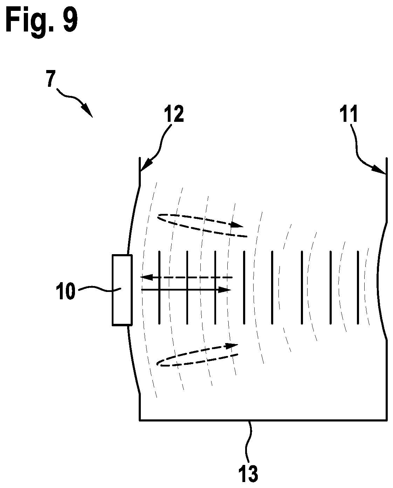

Figur 9 zeigt ein achtes Ausführungsbeispiel, das sich von dem Ausführungsbeispiel von Figur 8 dadurch unterscheidet, dass der Ultraschallwandler 10 dazu ausgebildet ist, ebene Ultraschallsignale beziehungsweise Wellen auszusenden, wie durch durchgezogene Linien gezeigt. Durch eine Krümmung der ersten Reflektorfläche 11 werden divergierende Ultraschallwellen zurückreflektiert, die sowohl auf den Ultraschallwandler 10 als erstes Echo als auch auf die zweite Ultraschallreflektorfläche 12 treffen, um von dort zurück auf die erste Reflektorfläche 11 reflektiert zu werden, welcher wiederum diese zurück zum Ultraschallwandler 10 als zweites Echo reflektiert. Die Krümmung der Reflektorfläche 11 ist dabei derart gewählt, dass eine divergierende Welle in Richtung des Ultraschallwandlers 10 zurückreflektiert wird. Durch die Strahlenaufweitung trifft ein Teil dieser Welle auch auf die zweite Reflektorfläche 12, die gemäß dem vorliegenden Ausführungsbeispiel ebenfalls gekrümmt ausgebildet ist, sodass eine Wellenfokussierung erfolgt, durch welche das Ultraschallsignal von der Reflektorfläche 12 zu der Reflektorfläche 11 fokussiert zurückreflektiert wird, sodass die Wellen erneut auf die gekrümmte Reflektorfläche 11 treffen.

## Patentansprüche

1. Vorrichtung (9) zur Qualitätsbestimmung einer Flüssigkeit, insbesondere eines Abgasnachbehandlungsmittels, mit zumindest einer in einem die Flüssigkeit aufbewahrenden Tank (2) anordenbaren Prüfeinheit (7), die zumindest einen Ultraschallwandler (10) zum Aussenden und Empfangen eines Ultraschallsignals und zumindest zwei Ultraschallreflektorflächen (11,12,14) zum Reflektieren des ausgesandten Ultraschallsignals zu dem zumindest einen Ultraschallwandler (10) aufweist, wobei die zumindest zwei Ultraschallreflektorflächen (11,12,14) direkt an einem gemeinsamen und einstückig ausgebildeten Trägerelement (13) in unterschiedlichen Entfernungen zu dem Ultraschallwandler (10) ausgebildet oder angeordnet sind, **dadurch gekennzeichnet, dass** eine der Ultraschallreflektorflächen (12) schräg zu dem Ultraschallwandler (10) und zu der anderen Ultraschallreflektorfläche (11) ausgerichtet und dazu ausgebildet ist, das Ultraschallsignal zumindest einmal umzulenken, bevor es zu dem Ultraschallwandler (10) zurückreflektiert wird, wobei hierbei das Ultraschallsignal zu zumindest einer weiteren, ebenfalls an dem Trägerelement (13) angeordneten Ultraschallreflektorfläche (14) gelenkt wird, von welcher aus das Ultraschallsignal zu dem Ultraschallwandler (10) zurückreflektiert wird.

2. Vorrichtung nach Anspruch 1, **dadurch gekennzeichnet, dass** zumindest eine der Ultraschallreflektorflächen (11,12,14) eine Krümmung aufweist.

3. Vorrichtung nach einem der vorhergehenden Ansprüche, **dadurch gekennzeichnet, dass** das Trägerelement (13) zumindest eine Aussparung (15) in einem reflektorfreien Bereich aufweist.

4. Vorrichtung nach einem der vorhergehenden Ansprüche, **dadurch gekennzeichnet, dass** zumindest eine der Ultraschallreflektorflächen (11,12,14) als Beschichtung auf dem Trägerelement (13) ausgebildet ist.

5. Vorrichtung nach einem der vorhergehenden Ansprüche, **gekennzeichnet durch** ein Steuergerät (8), das dazu ausgebildet ist, die Prüfeinheit (7), insbesondere den Ultraschallwandler (10), dazu anzusteuern, als Ultraschallsignal zumindest ein Burst-Signal zu erzeugen und zu empfangen, um in Abhängigkeit einer Laufzeitdifferenz der von den Ultraschallreflektorflächen (11,12,14) zurückreflektieren Ultraschallsignale eine Massenkonzentration in der Flüssigkeit zu bestimmen.

6. Tankvorrichtung (1), insbesondere Reduktionsmitteltankvorrichtung für ein Abgasnachbehandlungssystem eines Kraftfahrzeugs, mit einem Tank zur Aufbewahrung und Bereitstellung einer Flüssigkeit (3), insbesondere eines Abgasnachbehandlungsmittels, und mit einer Vorrichtung (9) zur Qualitätsbestimmung der Flüssigkeit, wobei die Vorrichtung (9) zumindest eine in den Tank (2) anordenbare Prüfeinheit (7) aufweist, **gekennzeichnet durch** die Ausbildung der Vorrichtung (9) nach einem der Ansprüche 1 bis 5.

## Claims

1. Device (9) for determining the quality of a liquid, in particular an exhaust gas aftertreatment agent, having at least one test unit (7) which can be arranged in a tank (2) storing the liquid and has at least one ultrasonic transducer (10) for emitting and receiving an ultrasonic signal and at least two ultrasonic reflector surfaces (11, 12, 14) for reflecting the emitted ultrasonic signal to the at least one ultrasonic transducer (10), wherein the at least two ultrasonic reflector surfaces (11, 12, 14) are formed or arranged directly on a common and one-piece carrier element (13) at different distances from the ultrasonic transducer (10), **characterized in that** one of the ultrasonic reflector surfaces (12) is oriented obliquely to the ultrasonic transducer (10) and to the other ultrasonic reflector surface (11) and is designed to deflect the ultrasonic signal at least once, before it is reflected back to the ultrasonic transducer (10), wherein here the ultrasonic signal is directed to at least one further ultrasonic reflector surface (14) which is also arranged on the carrier element (13) and from which the ultrasonic signal is reflected back to the ultrasonic transducer (10).

2. Device according to Claim 1, **characterized in that** at least one of the ultrasonic reflector surfaces (11, 12, 14) has a curvature.

3. Device according to either of the preceding claims, **characterized in that** the carrier element (13) has at least one cutout (15) in a reflector-free region.

4. Device according to any of the preceding claims, **characterized in that** at least one of the ultrasonic reflector surfaces (11, 12, 14) is in the form of a coating on the carrier element (13).

5. Device according to any of the preceding claims, **characterized by** a controller (8), which is designed to actuate the test unit (7), in particular the ultrasonic transducer (10), to generate and to receive at least one burst signal as the ultrasonic signal in order to determine a mass concentration in the liquid as a function of a transit time difference of the ultrasonic signals reflected back by the ultrasonic reflector surfaces (11, 12, 14).

6. Tank device (1), in particular reducing agent tank device for an exhaust gas aftertreatment system of a motor vehicle, having a tank for storing and providing a liquid (3), in particular an exhaust gas aftertreatment agent, and having a device (9) for determining the quality of the liquid, wherein the device (9) has at least one test unit (7) which can be arranged in the tank (2), **characterized by** the design of the device (9) according to any of Claims 1 to 5.

## Revendications

1. Dispositif (9) de détermination de la qualité d'un liquide, en particulier d'un agent de post-traitement de gaz d'échappement, avec au moins une unité de contrôle (7) pouvant être disposée dans un réservoir (2) stockant le liquide, laquelle comporte au moins un transducteur à ultrasons (10) pour envoyer et recevoir un signal ultrasonore et au moins deux surfaces réfléchissantes d'ultrasons (11, 12, 14) pour réfléchir le signal ultrasonore envoyé vers l'au moins un transducteur à ultrasons (10), les au moins deux surfaces réfléchissantes d'ultrasons (11, 12, 14) étant formées ou disposées directement sur un élément de support (13) commun et formé d'une seule pièce à des distances différentes du transducteur à ultrasons (10), **caractérisé en ce que** l'une des surfaces réfléchissantes d'ultrasons (12) est orientée obliquement par rapport au transducteur à ultrasons (10) et par rapport à l'autre surface réfléchissante d'ultrasons (11) et est formée pour dévier le signal ultrasonore au moins une fois avant qu'il ne soit réfléchi vers le transducteur à ultrasons (10), le signal ultrasonore étant dirigé vers au moins une autre surface réfléchissante d'ultrasons (14) également disposée sur l'élément de support (13), depuis laquelle le signal ultrasonore est réfléchi vers le transducteur à ultrasons (10).

2. Dispositif selon la revendication 1, **caractérisé en ce qu'**au moins une des surfaces réfléchissantes d'ultrasons (11, 12, 14) comporte une courbure.

3. Dispositif selon l'une des revendications précédentes, **caractérisé en ce que** l'élément de support (13) comporte au moins un évidement (15) dans une zone exempte de réflecteur.

4. Dispositif selon l'une des revendications précédentes, **caractérisé en ce qu'**au moins une des surfaces réfléchissantes d'ultrasons (11, 12, 14) est formée comme un revêtement sur l'élément de support (13).

5. Dispositif selon l'une des revendications précédentes, **caractérisé par** un appareil de commande (8), qui est formé pour piloter l'unité de contrôle (7), en particulier le transducteur à ultrasons (10) pour générer et recevoir au moins un signal de salve en tant que signal ultrasonore afin de déterminer une concentration massique dans le liquide en fonction d'une différence de temps de propagation des signaux ultrasonores réfléchis par les surfaces réfléchissantes d'ultrasons (11, 12, 14).

6. Dispositif de réservoir (1), en particulier un dispositif de réservoir d'agent réducteur pour un système de post-traitement de gaz d'échappement d'un véhicule à moteur, avec un réservoir destiné à stocker et à fournir un liquide (3), en particulier un agent de post-traitement de gaz d'échappement, et avec un dispositif (9) de détermination de la qualité du liquide, le dispositif (9) comportant au moins une unité de contrôle (7) pouvant être disposée dans le réservoir (2), **caractérisé par** la formation du dispositif (9) selon l'une des revendications 1 à 5.
